# EUROPEAN PATENT SPECIFICATION

(11) **EP 3 135 571 B1**
(45) Date of publication and mention of the grant of the patent: **20.03.2019**
(21) Application number: 16185280.1
(22) Date of filing: 23.08.2016
(51) Int. Cl.: B62J 15/00, B62K 5/027, B62K 5/05, B62K 5/08, B62L 1/00

(54) **STRADDLE TYPE VEHICLE**
GRÄTSCHSITZFAHRZEUG
VÉHICULE DE TYPE À SELLE

(30) Priority: 31.08.2015 JP 2015171514
(43) Date of publication of application: 01.03.2017
(73) Proprietor: Honda Motor Co., Ltd., Minato-ku Tokyo 107-8556 (JP)
(72) Inventor: WATANABE, Kazuki, Wako-Shi, Saitama 351-0193 (JP)
(74) Representative: Dehns

(56) References cited:
- EP-A2- 1 559 594
- DE-A1- 10 334 555
- DE-A1- 19 608 177
- US-A1- 2007 251 745
- US-A1- 2015 130 209

## Description

The present invention relates to a straddle type vehicle.

There is a well-known and conventional structure of a straddle type vehicle in which a cover portion covering the side surface of a front fork is integrally formed on a front fender (see, for example, Japanese Patent No. 5595623). There is no specific description in this document of a brake caliper.

In the above-mentioned conventional structure, it is preferable for splashing of the brake caliper, such as a splatter from the road surface onto the brake caliper, to be suppressed by a cover portion of a front fender covering a brake caliper. In this case, there is a problem that the cover portion of the front fender can easily become enlarged.

A straddle type vehicle having two front wheels and a single rear wheel is known from US 2007/0251745 (on which the pre-characterising part of claim 1 is based).

US 2015/0130209 discloses a two-wheeled vehicle with a cover portion covering part of the front wheel.

At least the preferred embodiments of the present invention aim to prevent the front fender from becoming enlarged while the front fender can cover the brake caliper in the front fender structure of the straddle type vehicle.

According to a first aspect of the present invention, there is provided a straddle type vehicle having two front wheels and a single rear wheel which has a front wheel suspension device axially supporting a front wheel, a front fender covering an upper part of said front wheel, and a front wheel brake system for braking said front wheel, wherein said front wheel brake system has a brake disc provided on said front wheel, and a brake caliper generating braking force by gripping said brake disc, characterized in that said front fender has a cover portion covering said brake caliper and avoiding said front wheel suspension device, and in that said brake caliper and said cover portion are disposed in front of a shaft of said front wheel.

According to this aspect, the cover portion avoiding the front wheel suspension device of the front fender also covers the brake caliper. Compared with the prior art where the cover portion also covers the front wheel suspension device, the front fender covers the brake caliper and can suppress splashing of splattered material (such as rain water, mud or the like) from the road surface onto the brake caliper, while suppressing enlargement of the cover portion of the front fender. Moreover, compared with the case where the cover portion also covers the front suspension device, heat is less likely to accumulate inside the cover portion, which allows the cooling performance of the front wheel brake system to be secured. Furthermore, there is no need to separately provide a cover member for covering the brake caliper, which allows a reduction in the number of parts.

Preferably, said cover portion has a drooping portion extending downwardly from a main body of said front fender covering a part of the outer periphery of said front wheel and covering said brake caliper from the side, and a lower extended portion extends from said drooping portion toward said brake caliper side and covers said brake caliper from below.

With this arrangement, splatter of rain water, mud and the like from the road surface onto the brake caliper can be effectively suppressed.

The brake caliper and the cover portion are positioned in front of a shaft of the front wheel.

Accordingly, the traveling wind pressure can be reduced and the traveling wind can be guided corresponding to the shapes of the cover portion and the like. Therefore, cooling performance of the brake caliper can be secured. Moreover, the cover portion is disposed in front of a shaft. Accordingly, the cover portion can be emphasized as a design surface when the straddle type vehicle is parked in a state where the wheels are steered. Therefore, the cost can be suppressed, compared with the case that the design surface is formed on the metal brake caliper.

Preferably, a guide portion guiding the traveling wind to the brake caliper is formed on the cover portion.

Accordingly, the brake caliper is covered, which allows the cooling performance of the front wheel brake system to be secured.

Preferably, a connected portion which connects hydraulic pressure piping of said brake caliper projects laterally from said brake caliper, and said cover portion has a concave region part covering said connected portion.

With this arrangement, the concave region part covers the connecting portion projecting laterally from the brake caliper so as to surround it, which can effectively suppress splashing of rain water, mud and the like from the road surface onto the connection portion.

Preferably, a drain portion which communicates with a cylinder chamber of said brake caliper projects laterally from said brake caliper, and said cover portion has a concave part covering said drain portion.

With this arrangement, the concave part covers the drain portion projecting laterally from the brake caliper so as to surround it. This can suppress splashing of rain water, mud or the like from the road surface onto the drain portion.

A preferred embodiment of the invention will now be described by way of example only and with reference to the accompanying drawings, in which:
FIG. 1 is a right side view of a straddle type vehicle according to the preferred embodiment of the present invention;
FIG. 2 is a plan view of the above-mentioned straddle type vehicle;
FIG. 3 is a front view of the above-mentioned straddle type vehicle;
FIG. 4 is a right side view of the head box in the above-mentioned straddle type vehicle;
FIG. 5 is a front view of the above-mentioned head box;
FIG. 6 is a plan view of the above-mentioned head box;
FIG. 7 is a right side view of the area around the head box in the above-mentioned straddle type vehicle;
FIG. 8 is a sectional view taken along line 8-8 in FIG. 3;
FIG. 9 is a sectional view taken along line 9-9 in FIG. 1;
FIG. 10 is a left side view of the right front wheel, seen from the inside in the lateral direction of the vehicle of the above-mentioned straddle type vehicle;
FIG. 11 is an enlarged view of the main parts in FIG. 10;
FIG. 12 is a sectional view taken along line 12-12 in FIG. 10;
FIG. 13 is a sectional view taken along line 13-13 in FIG. 10;
FIG. 14 is a sectional view taken along line 14-14 in FIG. 10;
FIG. 15 is a left side view of a front fender of the above-mentioned right front wheel;
FIG. 16 is a plan view of the above-mentioned front fender;
FIG. 17 is a front view of the above-mentioned front fender;
FIG. 18 is a perspective view of the above-mentioned front fender;
FIG. 19 is a perspective view of a fastening portion of an exhaust muffler; and
FIG. 20 is a perspective view of the area around the front body cover.

Hereinafter, the embodiment of the present invention will be explained with reference to the Figures. Moreover, directions such as "front", "rear", "right" and left" should be interpreted from the viewpoint of a rider of the vehicle unless otherwise stated. Furthermore, in the Figures, an arrow "FR" shows the front direction of the vehicle, an arrow "LH" shows the left direction of the vehicle, and an arrow "UP" properly shows the upper direction of the vehicle. A line "CL" in the drawings indicates the horizontal (lateral) centreline of the vehicle body.

### <Whole vehicle>

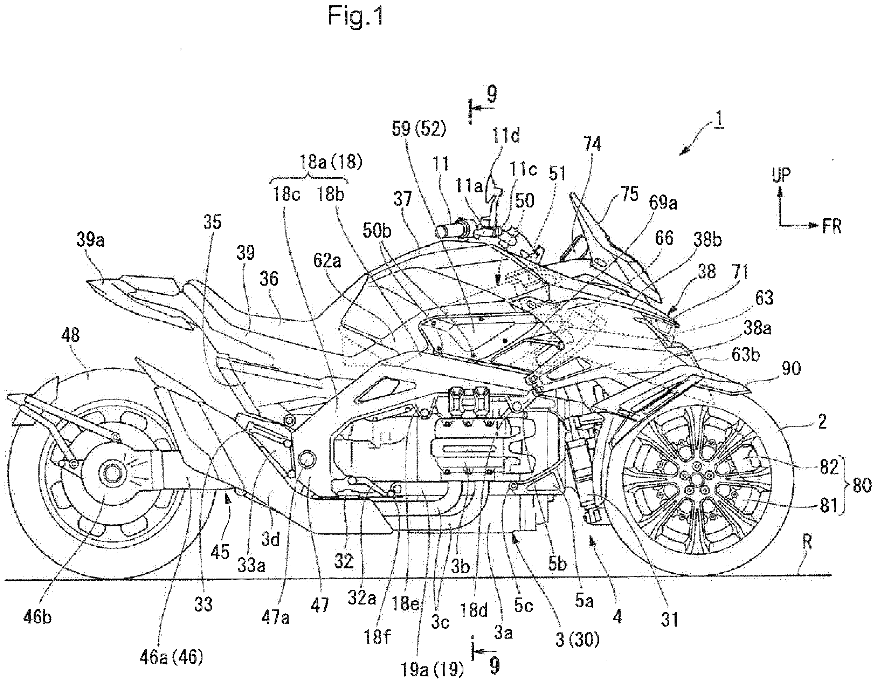

As shown in FIGS. 1 to 3, in the present embodiment, a straddle type vehicle 1 is configured as a three-wheeled swing type vehicle, which has front wheels 2 as the right and left pair steering wheels on the front portion of the vehicle body, and also has a rear wheel 48 as a single driving wheel on the rear portion of the vehicle body. The vehicle body can horizontally swing (can roll) in a state where the right and left front wheels 2 are both touching the ground.

Hereinafter, the configuration will be explained with reference to the state in which the right and left front wheels 2 are both touching the horizontal road surface R, in a 1G state such that the same load as the vehicle weight is dividedly applied on the front wheels 2 and the rear wheel 48, in a state in which the vehicle body vertically stands (with a horizontal swing angle of 0 degrees), and in a straight steering state in which the steering angle of the right and left front wheels 2 is 0 degrees. The configuration described below is laterally symmetrical relative to the horizontal centre of the vehicle body unless there is specific description otherwise.

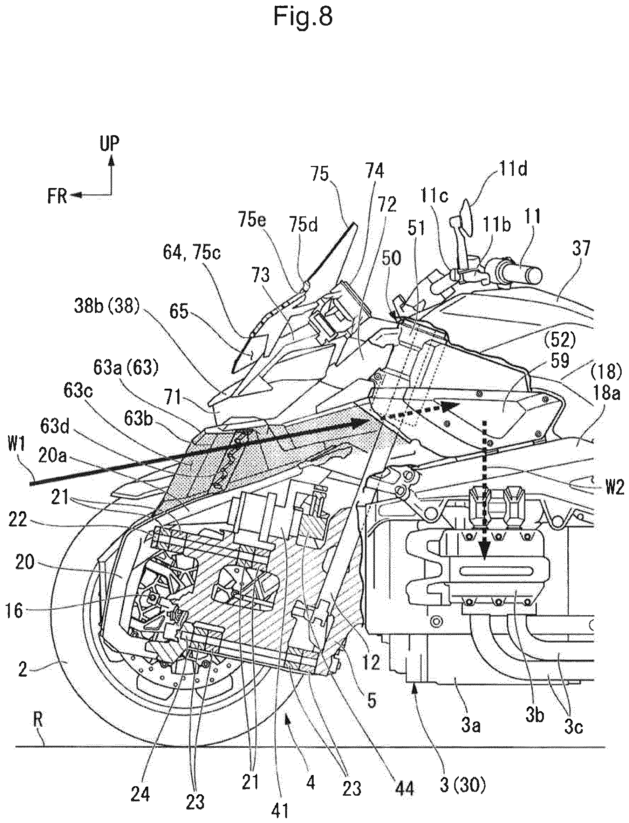

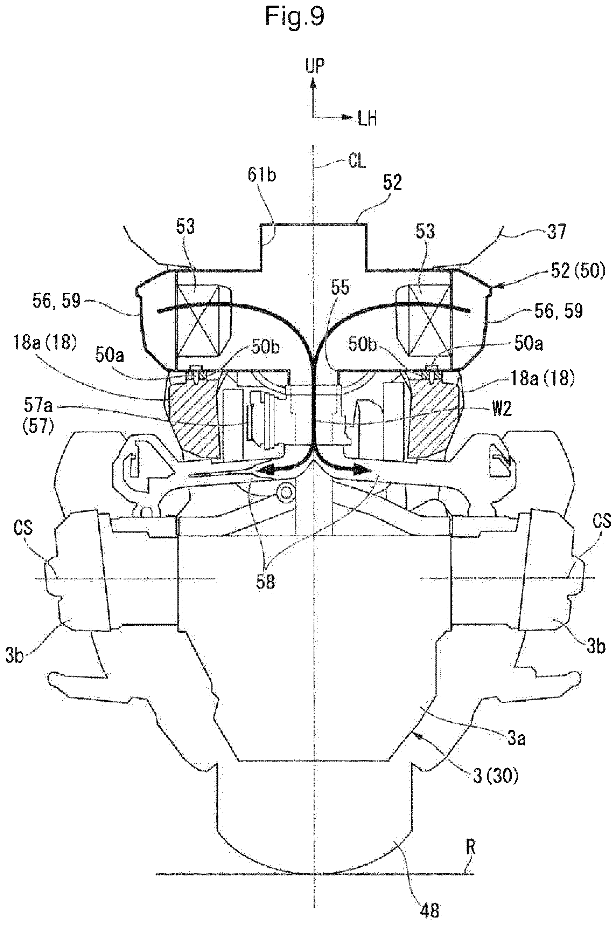

Also with reference to FIGS. 8 and 9, the straddle type vehicle 1 is configured such that a front suspension frame body 5 supporting a front two-wheeled suspension device 4 is attached to the front portion of a power unit 30 which is mounted on the centre of the vehicle body. In an example, the power unit 30 includes a horizontally opposed four-cylinder type engine 3. The engine 3 is configured such that right and left cylinders 3b project on both sides of a crank case 3a positioned on the lateral centre in the horizontal direction of the vehicle. Exhaust pipes 3c are located below the right and left cylinders 3b. The exhaust pipes 3c are bent and extend rearwardly. Exhaust mufflers 3d are disposed on both sides of the rear portion of the vehicle body. The rear end portions of the exhaust pipes 3c are connected to the front end portions of the exhaust mufflers 3d. A line CS in FIG. 9 shows a centre axis of the right and left cylinders 3b.

With reference to FIG. 1, the front suspension frame body 5 is attached to the front portion of the crank case 3a of the engine 3 through a mount frame 5a. The mount frame 5a includes right and left paired upper and lower mount portions 5b, 5c respectively. The upper and lower mount portions 5b, 5c are combined with the upper portion and lower portion of the front portion of the crank case 3a, respectively.

A main frame 18 supporting the power unit 30 is disposed on the upper and rear parts of the crank case 3a. A seat frame 35 is connected at the rear of the main frame 18. A seat 36 on which a rider may sit is supported on the seat frame 35. A fuel tank 37 is disposed in front of the seat 36. A front body cover 38 is attached to the front portion of the vehicle body. A rear body cover 39 is attached to the rear portion of the vehicle body. A ventilation hole 36a is provided on the horizontally central portion of the seat 36, and is formed in a mesh shape so as to allow ventilation of the space below the seat 36.

A pivot portion 47 supporting a front end portion of a swing arm 46 of a rear wheel suspension device 45 is provided on a rear portion of a main frame 18. The pivot portion 47 vertically and swingably supports a front end portion of the swing arm 46 through a horizontally extending pivot shaft 47a. The swing arm 46 is a cantilever type, which for example only has a right arm 46a. A final gear box 46b is connected to the rear end portion of the right arm 46a of the swing arm 46. A rear wheel 48 is axially supported on the left side of the final gear box 46b. A drive shaft (not shown) is inserted into the right arm 46a so as to connect the rear wheel 48 and the power unit 30.

The main frame 18 has right and left paired frame main bodies 18a. The frame main body 18a has a longitudinally extending portion 18b which extends longitudinally above the crank case 3a, and a generally vertically extending portion 18c which extends generally vertically behind the crank case 3a. The main frame 18 has a cross frame in appropriate proper places, which connects the right and left frame main bodies 18a.

Front and rear mount portions 18d, 18e which project downwardly are provided below the front portion and the middle portion of the longitudinally extending portion 18b of frame main body 18a. An upper end portion of the crank case 3a is supported on the front and rear mount portions 18d, 18e, respectively. The front mount portion 18d and an upper mount portion 5b of mount frame 5a are connected to the main frame 18a. Accordingly, the front portion of the main frame 18 and the upper portion of the mount frame 5a are connected.

A rear lower mount portion 18f projecting forwardly is provided on the front side of the lower portion of the generally vertically extending portion 18c of the frame main body 18a. The rear lower end portion of the crank case 3a is supported on the rear lower mount portion 18f.

A lower frame 19 is disposed between the rear lower mount portion 18f and the lower mount portion 5c of the mount frame 5a. The lower frame 19 has right and left paired lower beams 19a which extend longitudinally. The lower beams 19a are linearly provided so as to longitudinally cross the lower outside of the crank case 3a below the lower portion outside of a cylinder 3b. The lower beams 19a connect between the rear lower mount portion 18f of the main frame 18 and the lower mount portion 5c of the mount frame 5a on both laterally outer sides of the crank case 3a. The main frame 18, the mount frame 5a, and the lower frame 19 form right and left paired closed loop structures on both laterally outer sides of the power unit 30.

Right and left main steps 32 supported on the lower portion front side of the pivot portion 47 are disposed below the front portion of the seat 36. A brake pedal 32a is disposed in the vicinity of the right main step 32. A shift pedal 32b is disposed in the vicinity of the left main step 32. A pillion step 33 which is supported on the rear portion of the pivot portion 47 through a pillion step stay 33a is disposed below the rear portion of the seat 36.

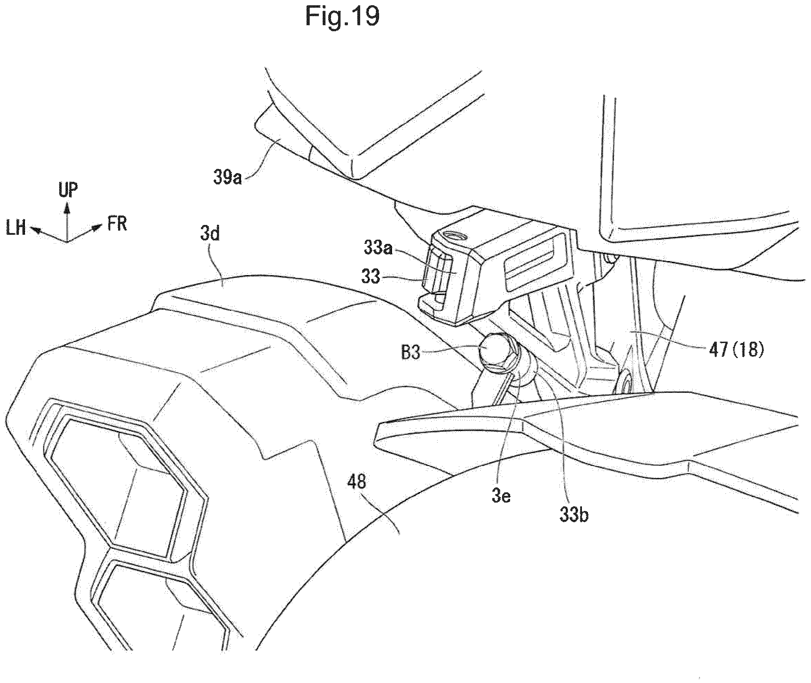

The pillion step stay 33a supports the exhaust muffler 3d by fastening in a radial direction of the rear wheel. With reference to FIG. 19, specifically, a cylindrical stay side fastening portion 33b is provided so as to rise rearwardly on the lower portion of the pillion step stay 33a. Simultaneously, a cylindrical muffler side fastening portion 3e which is coaxial with the stay side fastening portion 33b is provided on the upper portion of the exhaust muffler 3d. The respective fastening portions 33b, 3e are fastened to each other by a bolt B3 which extends parallel to the radial direction of the rear wheel 48 (and thus orthogonally to the axial direction of the rear wheel 48). Accordingly, the bolt B3 supporting the exhaust muffler 3d is reduced in size and inconspicuous.

With reference to FIG. 8, a lower portion of a steering shaft 12 which extends generally vertically in the horizontal centre of the vehicle body (laterally centrally of the vehicle) is rotatably supported on the front suspension frame body 5. A bar-type steering handle (or handlebar) 11 is integrally installed on the upper end portion of the steering shaft 12. The upper portion of the steering shaft 12 is rotatably supported on a head pipe 51 of a head box 50 (described below).

The steering shaft 12 is positioned on the lateral centreline of the vehicle body CL and faces to the inside of the rear portion of the front suspension frame body 5. A steering link mechanism (not shown) is disposed in front of the lower end portion of the steering shaft 12. The steering link mechanism is connected to right and left knuckle members 26 through right and left tie rods 16. The right and left front wheels 2 are axially supported on the right and left knuckle members 26, respectively. The steering link structure which includes the steering shaft 12, the steering link mechanism, the right and left tie rods 16, and the right and left knuckle members 26 is linked to rotation of the steering handlebar 11 and the steering of the right and left front wheels 2.

### <Front two-wheeled suspension device>

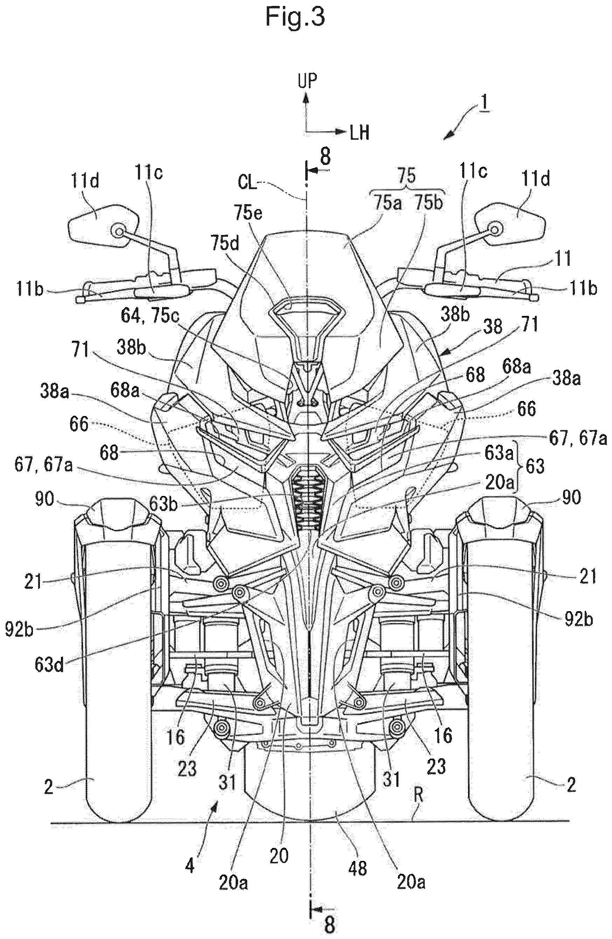

With reference to FIGS. 3 and 8, the front two-wheeled suspension device 4 is configured such that the vehicle body including the front suspension frame body 5, the power unit 30, and the like can move horizontally and swingably while the right and left front wheels 2 are in contact with the ground, and the right and left front wheels 2 also can move horizontally and swingably corresponding to the horizontal oscillation of the vehicle body. Further, the front two-wheeled suspension device 4 is configured such that the right and left front wheels 2 can alternately and vertically move relative to the vehicle body.

The front two-wheeled suspension device 4 has a double wishbone mode which independently suspends the right and left front wheels 2. The front two-wheeled suspension device 4 supports outer link members 25 on both sides of the front suspension frame body 5 extended in front of the steering shaft 12 at the lateral centre of the vehicle through an upper arm 21 and a lower arm 23, respectively. The right and left knuckle members 26 and the right and left front wheels 2 are steerably supported on the right and left outer link members 25, respectively.

An inside end portion of right and left upper arms 21 positioned at the lateral centre of the vehicle is supported so as to be vertically swingable on the upper portion of the front suspension frame body 5 through an upper swing shaft 22 longitudinally extended upwardly and forwardly. The inside end portions of the right and left upper arms 21 are alternately disposed in the axial direction.

The inside end portion of the right and left lower arms 23 positioned at the lateral centre of the vehicle is supported so as to be vertically swingable on the lower portion of the front suspension frame body 5 through a lower swing shaft 24 parallel to the upper swing shaft 22. The inside end portions of the right and left lower arms 23 are alternately disposed in the axial direction.

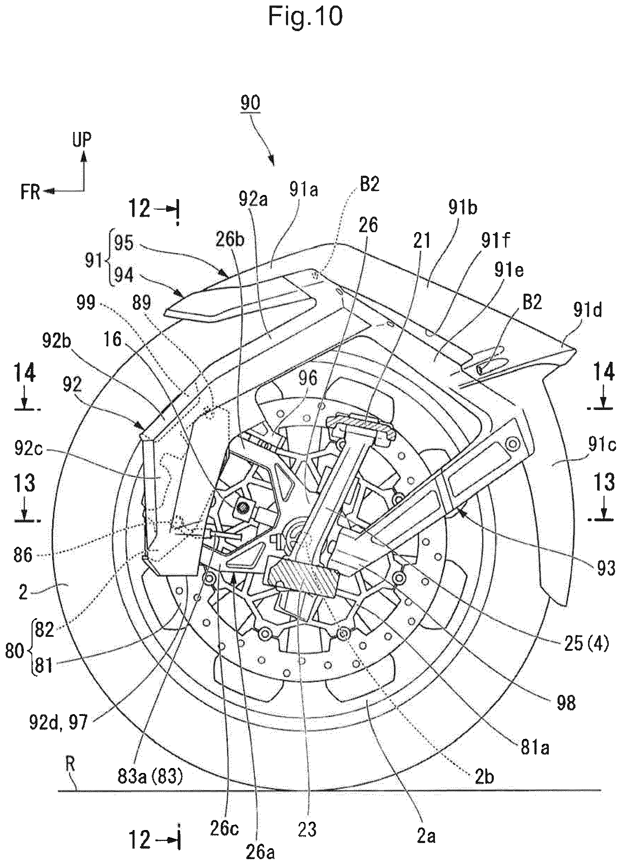

Also with reference to FIG. 10, the upper end portions of the right and left outer link members 25 is swingably supported on the outside end portion of the right and left upper arms 21 through an upper outer swing shaft (not shown) parallel to vertical swing shafts 22, 24. The lower end portions of right and left outer link members 25 are swingably supported on the outside end portion of the right and left lower arms 23 through a lower outer swing shaft (not shown) parallel to the vertical swing shafts 22, 24.

The right and left upper arms 21, the right and left lower arms 23, and the right and left outer link members 25 are disposed on both sides of the vehicle body in a parallel linked state. Accordingly, when the right and left upper arms 21 and the right and left lower arms 23 vertically swing, the right and left outer link members 25, the right and left knuckle members 26, and the right and left front wheels 2 vertically move so as to be approximately parallel.

With reference to FIG. 8, a front link cover 20 is installed on the front end portion of the front suspension frame body 5 which is vertically extended. The front end portion of the vertical swing shafts 22, 24 are supported on the front link cover 20. A traveling wind guiding hole 20b is formed so as to enhance the cooling performance of the power unit 30 on both sides of the front link cover 20.

With reference to FIGS. 1 and, 3, right and left cushion units 31 which respectively receive the loads on the right and left front wheels 2 are approximately and vertically extended above the rear portion of the right and left lower arms 23. Each cushion unit 31 is inclined such that the upper side is positioned rearwardly relative to the vertical direction and disposed so as to extend perpendicular to the upper and lower swing shafts 22, 24, in a side view. Each cushion unit 31 is disposed so as to be approximately vertical in a front view.

The lower end portions of the right and left cushion units 31 are connected to the right and left lower arms 23, respectively. With reference to FIG. 8, the upper end portions of the right and left cushion units 31 are connected to right and left end portions of integral cushion supporting arm 44 which extends generally horizontally. The horizontal centre portion of the cushion supporting arm 44 is swingably supported on the front suspension frame body 5 through a cushion swing shaft (not shown) parallel to the upper and lower swing shafts 22, 24. An actuator 41 for controlling the inclination angle of the vehicle body is connected to the cushion supporting arm 44.

### <Head box>

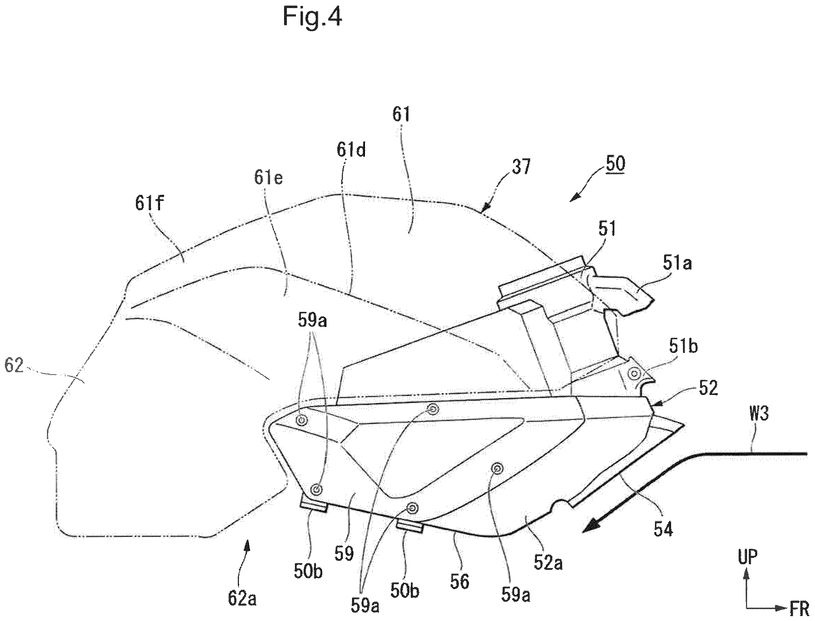

With reference to FIG. 1, the head box 50 is disposed between the fuel tank 37 and the engine 3. Also with reference to FIGS. 4 to 6, the head box 50 includes the head pipe 51 and an air cleaner box 52. The head box 50 has a different form from the main frame 18, and is fixed on the upper surface of the longitudinally extending portion 18b of the right and left frame main bodies 18a of the main frame 18 through a plurality of fixing members 50a. The fixing members 50a may, for example, be fastening bolts, and fix a lower wall portion 50b of a flow passage forming portion 56 of the air cleaner box 52 (described below) on the main frame 18 by a fastening operation from the inside of the air cleaner box 52.

The head box 50 is an integrally formed article, and may be made by casting a material such as aluminium alloy. The head box 50 can have a decreased strength or rigidity as it does not receive the input of the loads from the front two-wheeled suspension device 4 and the rear wheel suspension device 45, and can reduce the weight of the vehicle with a hollow structure like the air cleaner box 52. For example, the head box 50 can be made of resin. The head box 50 in the present embodiment is configured such that the air cleaner box 52 and the head pipe 51 are integrally formed. However, it may be configured such that a plurality of members are integrally connected by welding or fastening and the like.

The head box 50 comprises the flat air cleaner box 52 with a suppressed vertical extent. With also reference to FIG. 9, the air cleaner box 52 contains right and left paired elements 53 inside the right and left side portions thereof. An intake air inlet 54 opened to the front and lower direction in the vicinity of the lower end portion of the head pipe 51 is formed on the front end portion of the air cleaner box 52. In other words, the lower end portion of the head pipe 51 is disposed on the intake air inlet 54 formed on the front end portion of the air cleaner box 52. An intake air outlet 55 guiding the outside air which passed through the element 53 to the engine 3 side is formed on the rear lower end portion of the air cleaner box 52.

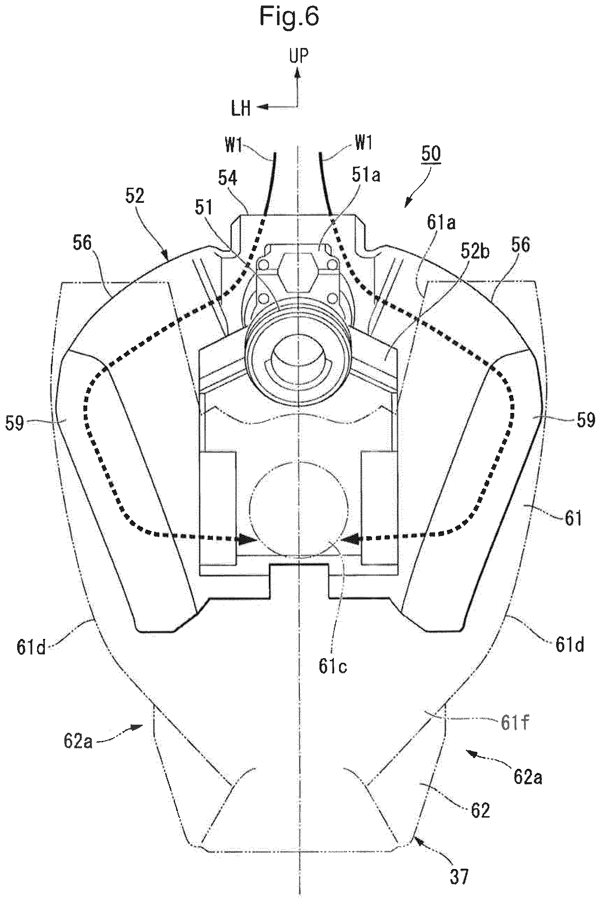

As shown by an arrow W1 in FIGS. 6 and 8, the outside air (the intake air) entering from the intake air inlet 54 to the inside of the air cleaner box 52 is split into right and left streams in the air cleaner box 52 and flows rearwardly, and flows to the right and left elements 53, respectively. Moreover, the portions which form the flow passage in the upstream side (dirty side) of the elements 53 of the right and left side portions of the air cleaner box 52 are called the flow passage forming portions 56.

Inside the air cleaner box 52, the outside air flows pass to the right and left elements 53 and are filtered through the right and left elements 53, flow to the clean side on both insides of the air cleaner box 52, and join each other. With reference to FIG. 9, the outside air reaching the clean side inside the air cleaner box 52 is guided from the intake air outlet 55 opened to the lower wall portion on both inside of the air cleaner box 52 to a downstream intake passage 57 connected to the lower direction of the intake air outlet. The downstream intake passage 57 includes a throttle body 57a, and has a fuel injection valve (not shown). The downstream intake passage 57 is connected to the inlet port of the respective cylinders through a manifold 58. As shown by an arrow W2 in FIGS. 8 and 9, the intake air reached to the downstream intake passage 57 is supplied to the respective cylinders of the engine 3 with the fuel corresponding to the throttle operation by the rider.

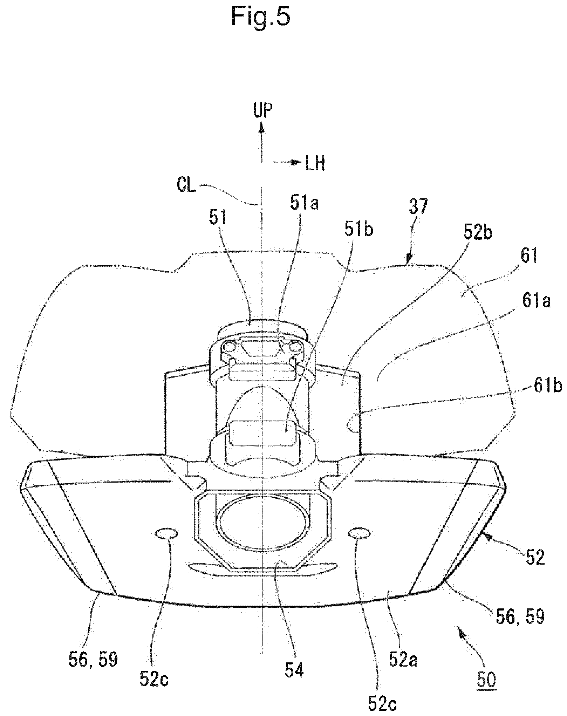

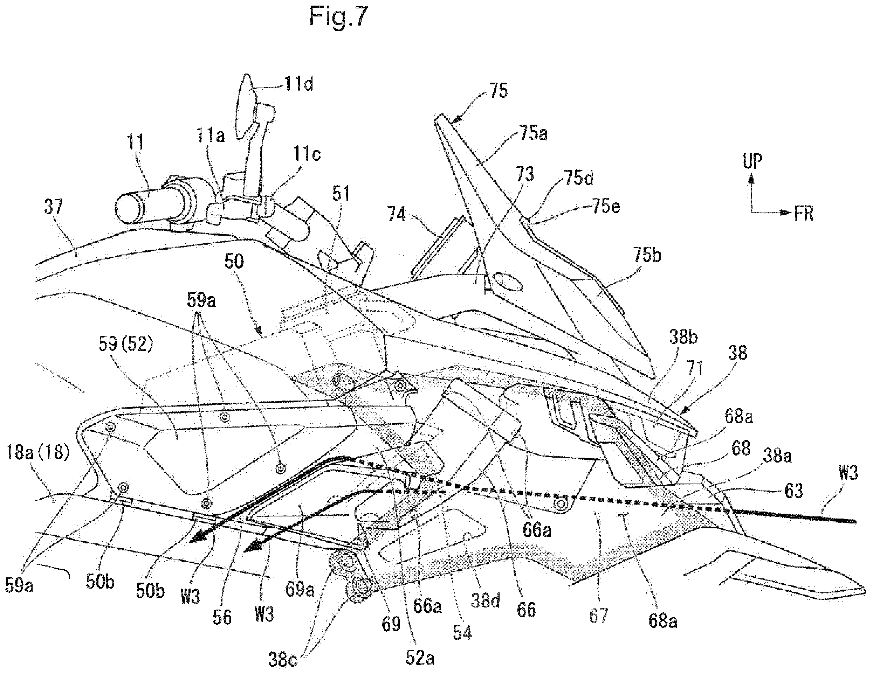

With reference to FIGS. 4 to 6, the outside portion of the flow passage forming portion 56 of the air cleaner box 52 is set as a cover 59 which is removably attached to the box main body with a plurality of fastening screws 59a. The detachable cover 59 enables the maintenance of the element 53. The cover 59 is exposed at the side of the vehicle between the main frame 18 and the fuel tank 37, and forms a part of the outer appearance of the vehicle. The front wall portion of the air cleaner box 52 including the cover 59 is inclined so as to be positioned lower as it goes to the rear. The front wall portion functions as a guide portion 52a which sends the traveling wind which is passed through a radiator 66 (described below) obliquely downwardly and rearwardly as shown by an arrow W3 in FIGS. 4 and 7. Reference numeral 52c in FIG. 5 shows a radiator supporting portion.

A swelling portion 52b, which has an approximately rectangular parallelepiped shape, is formed so as to project above the upper wall portion of both outsides (the dirty side, the flow passage forming portion 56) on the upper wall portions of right and left inside (the clean side) of the air cleaner box 52. The swelling portion 52b increases the capacity of the clean side of the air cleaner box 52, simultaneously projects above the upper wall portion in the dirty side (the flow passage forming portion 56), and supports the upper portion of the head pipe 51 from the rear direction.

### <Fuel tank>

With reference to FIGS. 4 to 6, the fuel tank 37 for holding the fuel of the engine 3 is supported on the head box 50. The fuel tank 37 is provided so as to cover the head box 50 from above and from the rear direction. The fuel tank 37 has a tank front portion 61 covering the head box 50 from above, and a tank rear portion 62 covering the head box 50 from behind.

The tank front portion 61 is formed to be relatively flat (with a small vertical extent), and to be slightly broader horizontally than the horizontal width of the box. A front concave portion 61a which is open forwardly so as to avoid the periphery of the upper end of the head pipe 51 is formed on the tank front portion 61. A lower concave portion 61b which is open downwardly so as to match the swelling portion 52b of the head box 50 from above is formed on the lower portion of the tank front portion 61. The head box 50 and the fuel tank 37 are relatively located by matching the swelling portion 52b and the lower concaved portion 61b. A fuel filler opening 61c is formed at the lateral centre of the upper portion of the tank front portion 61.

A ridge line portion 61d rising rearwardly is formed on both side portions of the tank front portion 61. Further, an inclined wall 61e is formed on both side portions of the tank front portion and is positioned to extend laterally inwardly as it approaches downward from the ridge line portion 61d to the rear. A rearward extended portion 61f is provided at the rear of the tank front portion 61 so as to extend rearward further than the rear end of the head box 50. The ridge line portion 61d is inclined so as to be positioned on both insides as it approaches to the rear side in the plan view of the rearward extended portion 61f, and is inclined and extended downward to the rear direction in the side view of the rearward extended portion 61f.

The tank rear portion 62 is formed so as to be narrower than the tank front portion 61 and the head box 50, so as to facilitate the driver's knee grip. The right and left covers 59 of the head box 50 are inclined so as to be approximately parallel to an inclined wall 61e of the tank front portion 61. The tank rear portion 62, the right and left inclined walls 61e of the tank front portion 61, and the right and left covers 59 of the head box 50 form a knee grip portion 62a which can be sandwiched by both knees of the rider.

### <Intake duct>

With reference to FIGS. 3 and 8, an inclined wall 20a extends rearwardly and upwardly the upper end portion of the front link cover 20 of the front suspension frame body 5. The inclined wall 20a is connected to the lower end portion of the intake air inlet 54 of the head box 50, while avoiding the steering shaft 12. A duct main body 63a extends upwardly and rearwardly above the inclined wall 20a so as to be along the inclined wall 20a. The duct main body 63a is connected to the upper end portion and both end portions of the intake air inlet 54 of the head box 50.

The inclined wall 20a and the duct main body 63a in combination have a rectangular shape in cross section, and form an intake duct 63 which extends from an intake opening 63b on the front surface of the vehicle to the intake air inlet 54 of the head box 50. The intake duct 63 forms an intake passage 63c which extends upwardly and rearwardly at the lateral centre of the vehicle. A net-like grille 63d is disposed inside the front portion of the intake duct 63.

A notch portion 75c or similar of a screen 75 (to be described below) forms an upper intake opening 64 above the intake opening 63b. An upper air guiding passage 65 is formed to the rear of the upper intake opening 64 so as to be along the upper wall portion of the intake duct 63. The upper air guiding passage 65 suppresses the negative pressure by introducing the traveling wind to the rear direction of the screen 75.

### <Radiator, front body cover, lighting device>

With reference to FIGS. 3 and 7, the right and left radiators 66 for cooling the engine 3 are disposed in front of the head box 50 and on both sides of the intake duct 63. The radiators 66 are configured such that the core front surface faces forwardly. The radiators are inclined so that their upper ends are positioned further forwards in a side view, and simultaneously so as to be positioned such that the laterally outer parts are in front of the laterally inner parts in a plan view. The radiator 66 has supported portions 66a on the right and left of upper and lower portions, respectively.

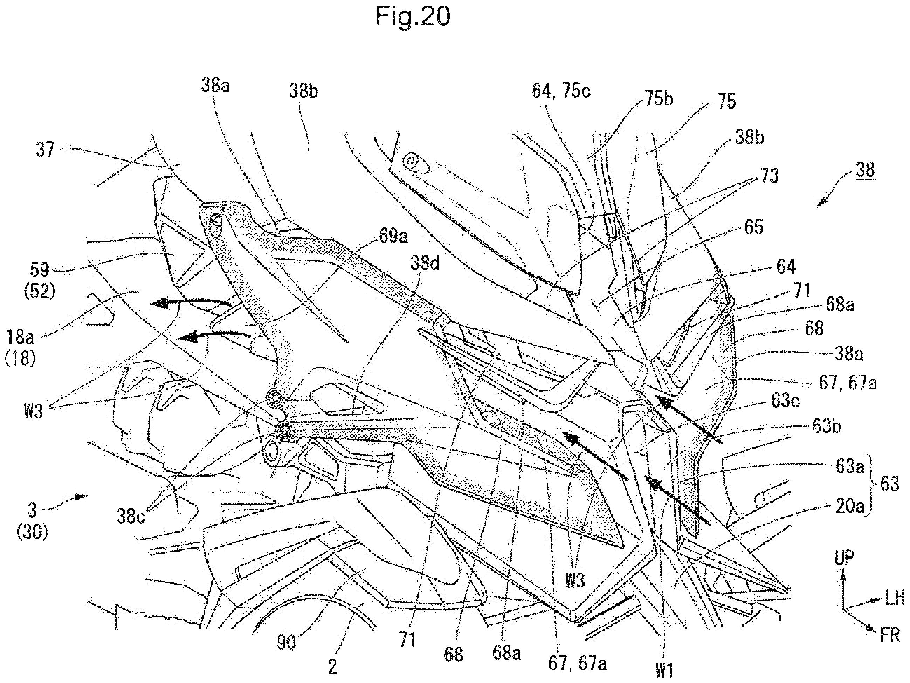

Also with reference to FIG. 20, air guiding passages 67a for supplying the traveling wind to the radiator 66 are formed on both sides of the intake duct 63 inside the front vehicle body cover 38, respectively. An outside air inlet 68 to the air guiding passage 67a is formed on both sides of the upper portion of the intake opening 63b in the front surface of the vehicle. A louver 68a which forms a V-shape in a front view is disposed on the outside air inlet 68. A head lamp unit 71 is disposed above the louver 68a in the air guiding passage 67a.

The front body cover 38 has right and left paired front side cowls 38a laterally covering the periphery of the intake duct 63 from the side, and right and left paired front upper cowls 38b covering the space between the right and left front side cowls 38a and the intake duct 63 from above. The front body cover 38 is formed so as to widen horizontally and rearwardly, and is formed broader than the fuel tank 37 at the rear portion of the front body cover.

Each front upper cowl 38b extends forwardly from a front end portion of the tank front portion 61 of the fuel tank 37. The front end portion of each front upper cowl 38b is bent and extends laterally inwardly. The front end portion of the right and left front upper cowls 38b are spaced apart from each other so as to avoid the upper intake opening 64.

The radiator 66 is disposed inside the front side cowl 38a. An air guiding passage forming portion 67 forming the air guiding passage 67a relative to the radiator 66 is comprised of the front side cowl 38a, the front upper cowl 38b, and the duct main body 63a of the intake duct 63. The rear portion of the front side cowl 38a forms an exhaust port 69 which is open rearwardly and exhausts the outside air passed through the radiator 66 rearwardly. Reference numeral 38c shows a supporting portion relative to the main frame 18, and reference numeral 38d shows a lightened portion of the front side cowl 38a, respectively.

The guide portion 52a of the head box 50 is disposed to the rear of the discharge port 69 so as to be separated rearward. Accordingly, the outside air is passed through the radiator 66 and exhausted from the discharge port 69, and is guided rearwardly and downwardly along the guide portion 52a. A straightening plate 69a guiding the air stream of the exhaust air is attached to the discharge port 69. The straightening plate 69a divides the exhaust air shown by the arrow W3 in FIG. 7 and directs it, which facilitates guiding the outside air by the guide portion 52a.

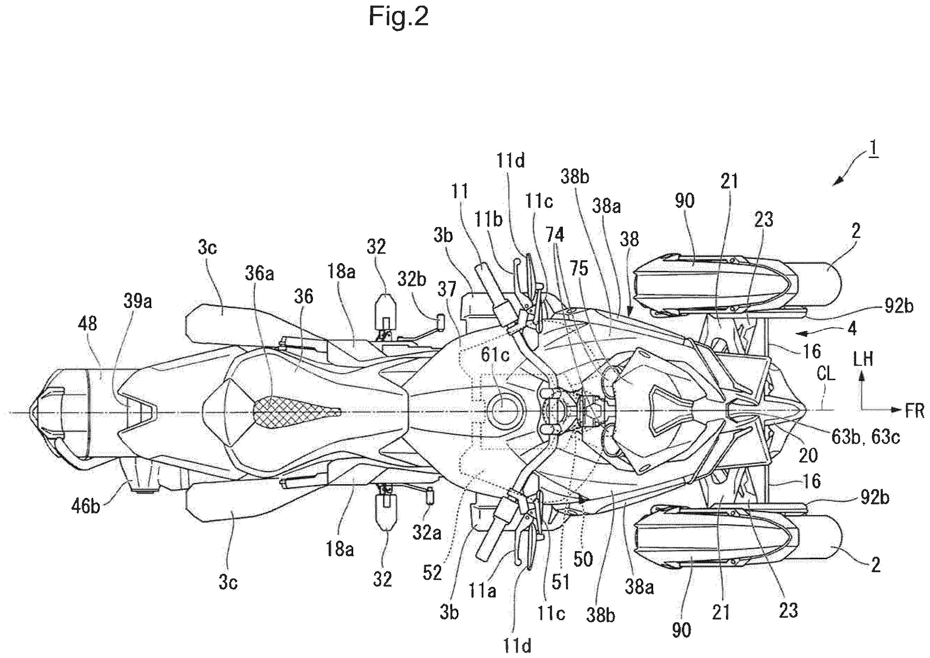

With reference to FIGS. 4 to 6, upper and lower mount portions 51a, 51b project from the front end portion of the head pipe 51. With reference to FIG. 8, a supporting frame 72 supporting auxiliary parts is installed on the upper and lower mount portions 51a, 51b. The right and left pair head lamp units 71, which use a light source such as LEDs, are supported on the front end portion of the supporting frame 72. The head lamp unit 71 includes a headlight and a daylight (running light). Moreover, the right and left winkers 11c are disposed (see FIGS. 2, 3 and 7) on both sides of the steering handle 11, respectively. Reference numeral 11d shows a rear-view mirror supported on both sides of the steering handle 11. Reference numeral 11a shows a brake lever disposed on the right grip of the steering handle 11. Reference numeral 11b shows a clutch lever disposed on a left grip of the steering handle 11. A tail lamp unit 39a is disposed on the rear end portion of the rear body cover 39 (see FIGS. 1 and 2).

### <Meter unit, screen>

Right and left paired support beams 73 forming an upwardly convex bent shape in a side view are disposed above the supporting frame 72. The support beam 73 extends so as to straddle between the upper mount portion 5b of the head pipe 51 and the housing of the right and left head lamps and is fixed to the upper mount portion and the housing. A meter unit 74 is supported on the rear portion of the right and left support beams 73. Right and left end portions of the screen 75 are supported on both lateral outsides of the top portion of the support beam 73.

With reference to FIGS. 3 and 7, the screen 75 has a trapezoid-type screen upper portion 75a and a reverse trapezoid-type screen lower portion 75b in a front view.

A screen upper portion 75a is inclined and extends upwardly and rearwardly in a side view. The screen upper portion 75a extends above the front upper cowl 38b.

The screen lower portion 75b is inclined upwardly and rearwardly in a side view, and is formed in a convex bending shape in the forward and upward direction. The notch portion 75c is formed on the laterally central lower side of screen lower portion 75b. The notch portion 75c forms the upper portion of the upper intake opening 64.

An opaque duct portion 75d can be provided on the centre portion of the screen 75 relative to the transparent or translucent screen main body. The duct portion 75d forms a ventilation hole 75e through which the traveling wind passes to the rear direction of the screen upper portion 75a. Simultaneously, the duct portion supports the screen 75 relative to the right and left support beams 73 and a meter unit 74.

### <Front wheel brake system>

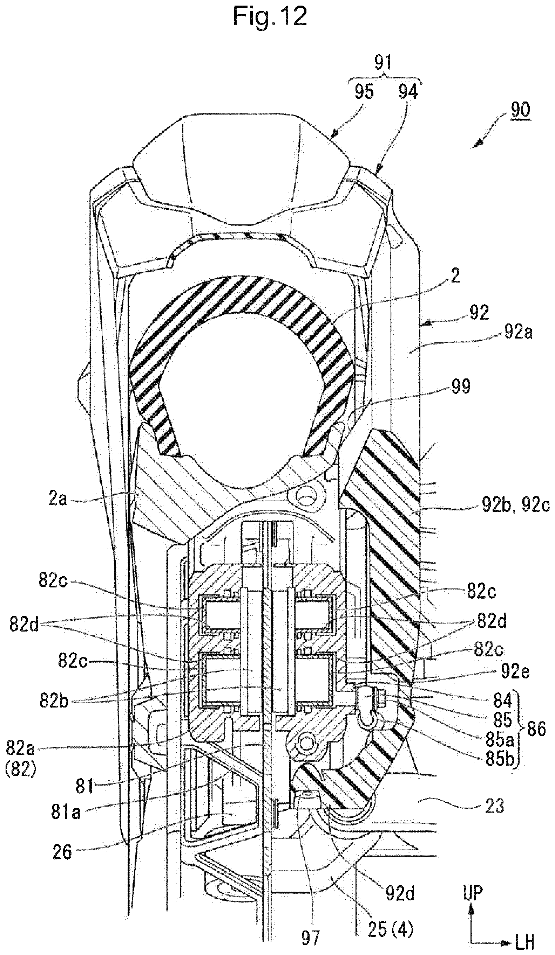

With reference to FIGS. 10 to 12, each front wheel 2 includes a brake disc 81 which is disposed laterally inside the wheel 2a and rotates integrally with the front wheel 2. A brake caliper 82, which can grip the brake disc 81, is supported on a caliper bracket 26a which is integrally formed on the front portion of the knuckle member 26 of each front wheel 2. A front wheel brake system 80 is configured with the brake disc 81 and the brake caliper 82 so as to apply braking force to each front wheel 2. The brake disc 81 is supported on the front wheel 2 through an inner disk 81a.

A front wheel brake system 80 is a hydraulic pressure (oil pressure) type disk brake. The hydraulic pressure may be supplied to the brake caliper 82 from a master cylinder (not shown) supported on the steering handle 11 through hydraulic pressure piping 83 including a brake hose 83a. The brake caliper 82 receives the supply of the hydraulic pressure, and grips the brake disc 81 and brakes the front wheel 2. Moreover, the brake caliper may be configured such that the hydraulic pressure is supplied from brake modules (including an ABS module and the like) to the brake caliper 82.

The brake caliper 82 is disposed laterally inside the front side of the front wheel 2 (in front of an axle 2b). The brake caliper 82 has a caliper body 82a horizontally straddling the brake disc 81 from the radially outer side of the brake disc 81, right and left paired brake pads 82b held inside the caliper body 82a, and two pairs of right and left caliper pistons 82c pressing the right and left brake pads 82b against the brake disc 81. Two paired right and left cylinder chambers 82d are formed inside the caliper body 82a so as to form a hydraulic pressure chamber by movably fitting the caliper pistons 82c back and forth.

A bolt B1 which is parallel to the radial direction of the brake disc 81 (orthogonal to the rotation axis of the brake disc 81) can be used to fasten and fix the upper portion and the lower portion of the caliper body 82a (both side portions of the brake disc 81 in the rotation direction) to the front end portion of upper and lower stays 26b, 26c of the caliper bracket 26a. The brake caliper 82 is biased upwardly and is disposed relative to the front end portion of the brake disc 81 in the rotation direction of the disk. When the direction crossing the upper and lower fastening positions is set as the longitudinal direction, the brake caliper 82 is inclined so as to be positioned rearwardly and upwardly in the longitudinal direction.

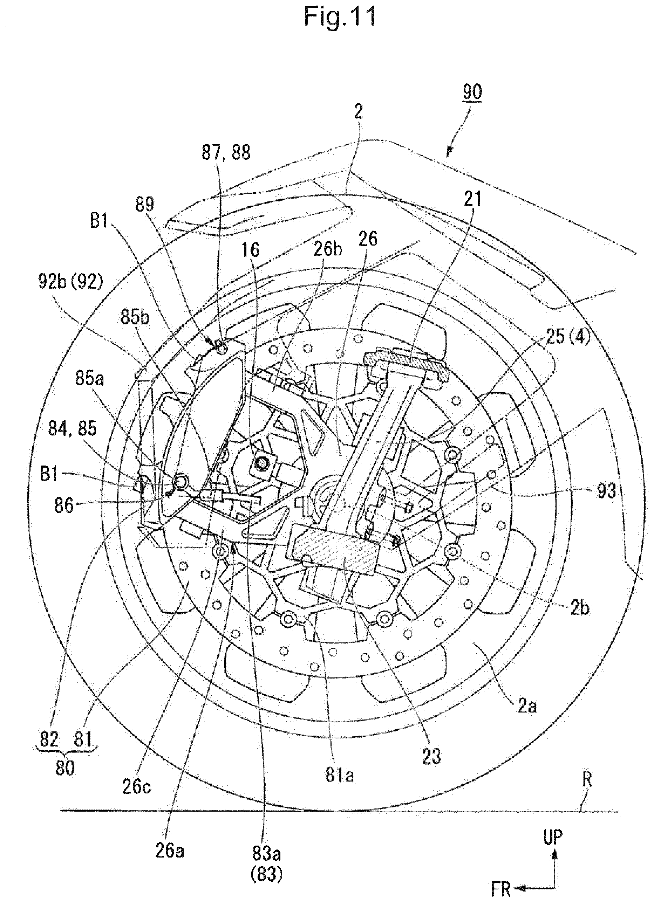

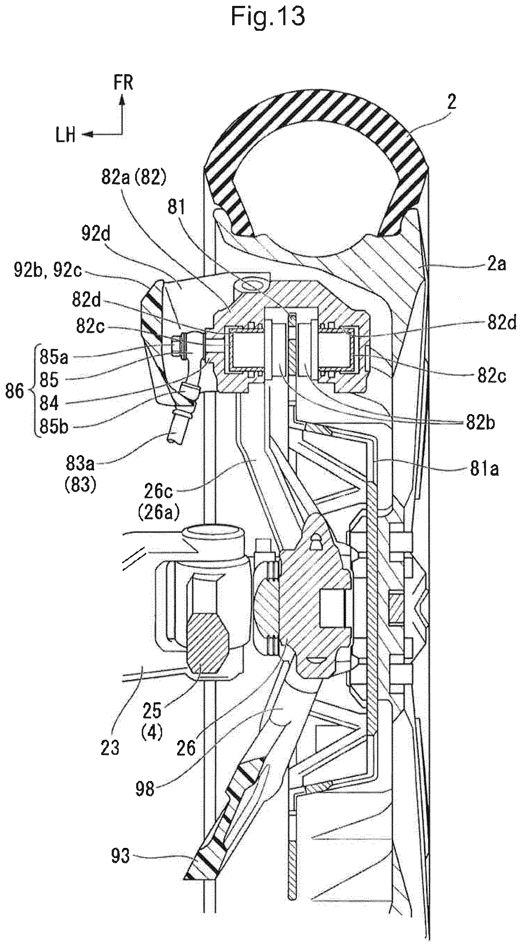

With reference to FIGS. 11 to 13, a charging and discharging boss 84 projects from the lower portion of the side surface of the brake caliper 82, on the laterally inner side of the vehicle, so as to open a hydraulic pressure port which can charge and discharge the hydraulic pressure. A banjo 85 which connects the end portion of a brake hose 83a, and a banjo bolt 85a which fastens the banjo to the charging and discharging boss 84, are installed on the charging and discharging boss 84. The banjo 85 is extended such that a hose connector faces rearwardly. The banjo bolt 85a is provided so as to be parallel to the horizontal direction, and is screwed from both insides of the banjo 85. The banjo bolt fastens the banjo 85 to the charging and discharging boss 84. A connected portion 86 connecting the brake hose 83a of the brake caliper 82 comprises the charging and discharging boss 84, the banjo 85, and the banjo bolt 85a.

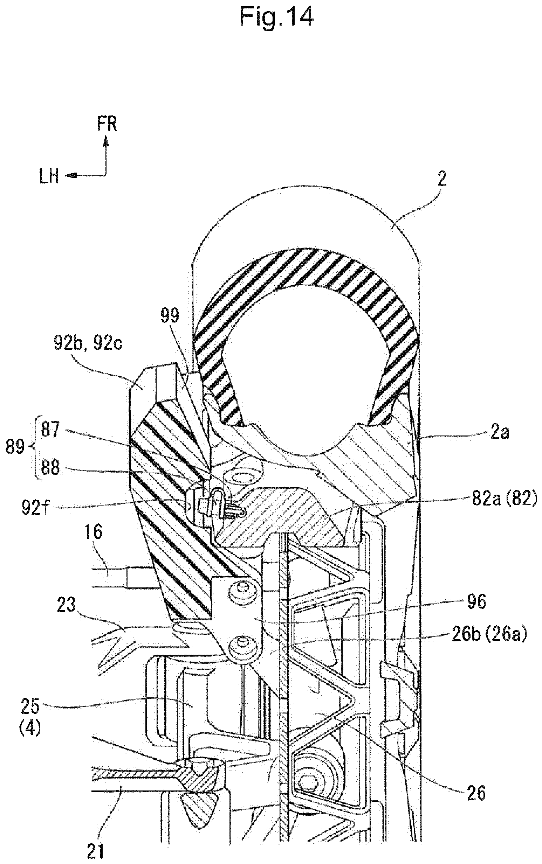

With reference to FIGS. 11 and 14, a bleeder boss 87 projected from the laterally inner side of the upper end portion of the brake caliper 82 so as to open a drain hole (air vent hole). A bleeder bolt 88 is screwed on the bleeder boss 87. The bleeder bolt 88 is provided so as to be parallel to the horizontal direction and is screwed with the bleeder boss 87 from both insides of the bleeder boss 87. The bleeder boss 87 and the bleeder bolt 88 form a drain portion 89 projecting further (especially to the side direction) than the outer surface of the upper end portion of the caliper body 82a. A tip portion (including a cap) of the lateral inside of the bleeder bolt 88 projects laterally further inside than the side surface of the caliper body 82a.

### <Front fender>

With reference to FIG. 10, a front fender 90 covering the outer periphery of the front wheel 2 is supported on the knuckle member 26 and the caliper bracket 26a. The front fender 90 has a fender main body 91 extending rearwardly from the upper portion of the front wheel 2 and covering the outer periphery, a front arm 92 extending from above the laterally inner side of the fender main body 91 forwardly and downwardly, and a rear arm 93 extending from the rear portion of the laterally inner side of the fender main body 91 forwardly and downwardly. The front arm 92 is fastened to and fixed on the upper stay 26b of the caliper bracket 26a. The rear arm 93 is fastened to and fixed on the rear portion of the knuckle member 26.

The fender main body 91 has a fender front portion 91a which is inclined downwardly and forwardly and extends forwardly from the vicinity of the upper end portion of the front wheel 2, a fender middle portion 91b which is inclined downwardly and rearwardly and extends rearwardly from the vicinity of the upper end portion of the front wheel 2, and a fender rear portion 91c extending vertically in the vicinity of the rear end of the front wheel 2. The fender front portion 91a and the fender middle portion 91b are linearly formed in a side view. The fender rear portion 91c is curvedly formed so as to extend along the outer periphery of the front wheel 2. A spoiler portion 91d is formed so as to project rearwardly in an acute angle shape on the rear end portion of the fender middle portion 91b.

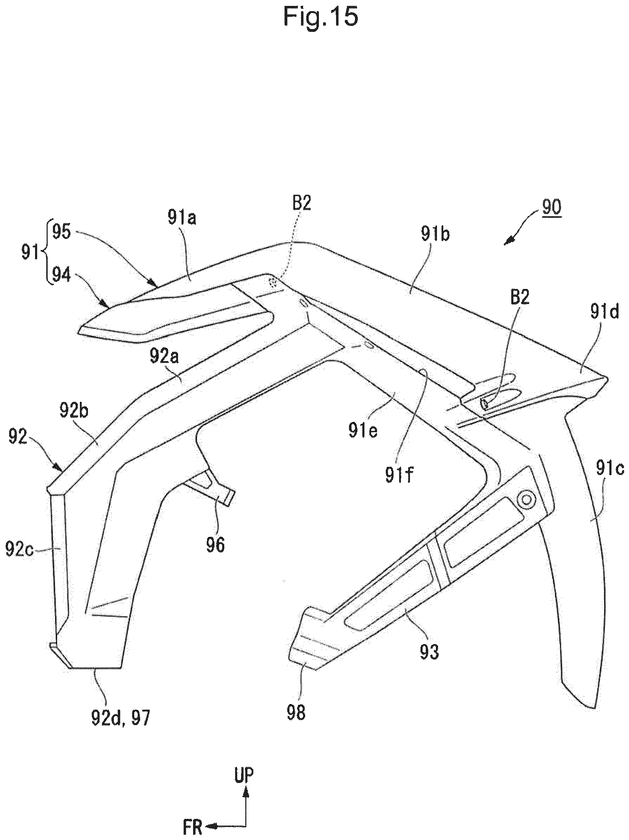

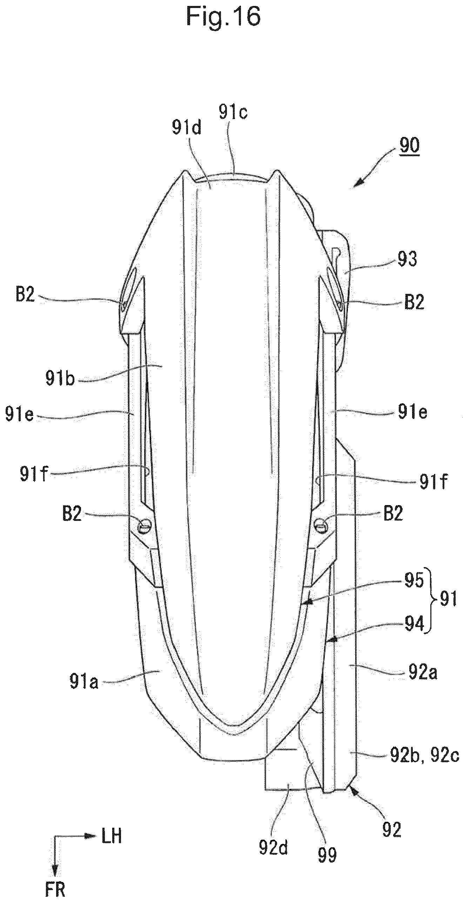

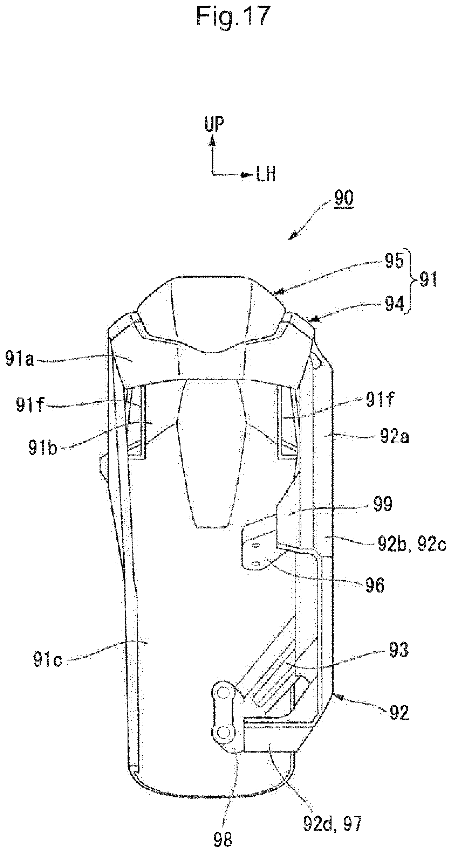

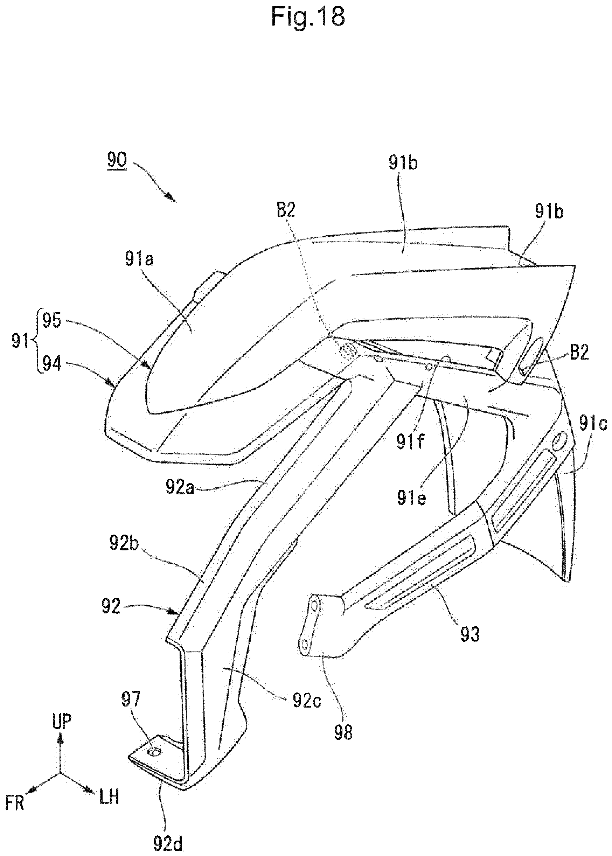

With reference to FIGS. 15 to 18, both side portions of the fender middle portion 91b are beam portions 91e formed so as to bulge laterally outwardly and extend linearly downwardly and rearwardly. A slit-shaped opening 91f is formed on both laterally inner sides of the beam portion 91e so as to be along the beam portion 91e. The fender main body 91 is dividedly configured, with the outside portions including the front end portion and both side end portions of the fender front portion 91a, the beam portion 91e of the fender middle portion 91b, a first member 94 forming the fender rear portion 91c, the inside portion except the outside portion of the fender front portion 91a, and a second member 95 forming the inside portion except the beam portion 91e of the fender middle portion 91b. The first member 94 and the second member 95 are fastened each other by bolts B2 which are inserted into the front and the rear of the beam portion 91e from above and behind, respectively.

The front arm 92 has a front lower portion 92a extending from the front portion of the beam portion 91e in the longitudinal direction so as to be approximately parallel to the fender front portion 91a in a side view, and a cover portion 92b extended from the tip portion of the front lower portion 92a so as to be sharply inclined forwardly and downwardly. The cover portion 92b extends so as to be approximately parallel to the longitudinal direction of the brake caliper 82 in a side view. The cover portion 92b includes a drooping portion 92c covering the brake caliper 82 from both insides. A lower extending portion 92d which is bent so as to extend laterally outwardly and cover the brake caliper 82 from below is provided on the lower end portion of the cover portion 92b.

A first fastening portion 96 relative to the upper portion of the upper stay 26b of the caliper bracket 26a is provided at the rear of the lower portion of the front lower portion 92a. A second fastening portion 97 relative to the lower portion of the lower stay 26c of the caliper bracket 26a is provided on the lower extending portion 92d of the cover portion 92b. A third fastening portion 98 relative to the rear portion of the knuckle member 26 is provided on the tip portion of the rear arm 93.

A guide portion 99 is formed on the inside of the front end of the drooping portion 92c so as to be inclined and positioned laterally further outward (towards the brake caliper 82 side) as it approaches the rear side. The guide portion 99 functions as a guide portion guiding the traveling wind to the brake caliper 82 side.

A concave region part 92e which covers the connected portion 86 so that there is a gap between the concave region part 92e and the connected portion 86 is formed on the portion of the drooping portion 92c opposite to the connected portion 86 of the brake caliper 82.

A concave part 92f covering the drain portion 89 so that there is a gap between the concave part 92f and the drain portion 89 is formed on the portion of the drooping portion 92c opposite to the drain portion 89 of the brake caliper 82.

The knuckle member 26 of the front two-wheeled suspension device 4, the outer link member 25, and the outside portion of the upper arm 21 and the outside portion of the lower arm 23 are closely disposed on both insides of the front wheel 2, and are arranged between the front arm 92 and the rear arm 93. In other words, the front arm 92 and the rear arm 93 are arranged so as to avoid the front two-wheeled suspension device 4.

As mentioned above, the straddle type vehicle 1 in the above-mentioned embodiment has the front fender 90 covering the upper part of the front wheel 2, and the front wheel brake system 80 for braking the front wheel 2. The front wheel brake system 80 has a brake disc 81 provided on the front wheel 2, the brake caliper 82 generates the braking force by gripping the brake disc 81, and the front fender 90 has a cover portion 92b covering the brake caliper 82 by avoiding the front wheel suspension device 4.

According to the configuration, the cover portion 92b avoiding the front wheel suspension device 4 of the front fender 90 covers the brake caliper 82. Compared with the known situation where the cover portion 92b also covers the front two-wheeled suspension device 4, the front fender 90 covers the brake caliper 82 and can suppress splashing by a splatter such as rain water, mud and the like from the road surface R onto the brake caliper 82, while avoiding enlargement of the cover portion 92b of the front fender 90.

Moreover, compared with the case where the cover portion 92b also covers the front two-wheeled suspension device 4, heat hardly accumulates inside the cover portion 92b, which allows the cooling performance of the front wheel brake system 80 to be secured. Furthermore, there is no need to separately provide a cover member for covering the brake caliper 82, which allows the number of parts to be reduced.

Moreover, in the above-mentioned straddle type vehicle 1, the cover portion 92b has a drooping portion 92c extending downwardly from a fender main body 91 covering the outer periphery of the front wheel 2 and covering the brake caliper 82 from the side, and a lower extending portion 92d extending from the drooping portion 92c to the brake caliper 82 side and covering the brake caliper 82 from below.

According to this configuration, the lower extending portion 92d covers the brake caliper 82 from below. Accordingly, splashing from the road surface R onto the brake caliper can be effectively suppressed.

Moreover, in the above-mentioned straddle type vehicle 1, the brake caliper 82 and the cover portion 92b are disposed in front of the shaft 2b of the front wheel 2.

According to this configuration, the brake caliper 82 and the cover portion 92b are disposed on the front side of the wheel 2. Therefore, the traveling wind pressure can be reduced and the traveling wind can be guided corresponding to the shapes of the cover portion 92b and the like.

Furthermore, in the above-mentioned straddle type vehicle 1, a guide portion 99 guiding the traveling wind to the brake caliper 82 is formed on the cover portion 92b.

According to this configuration, the traveling wind is guided to the brake caliper 82. Therefore, the brake caliper 82 is covered, and in addition, the cooling performance of the front wheel brake system 80 can be secured.

Moreover, in the above-mentioned straddle type vehicle 1, the connected portion 86 which connects a hydraulic pressure piping 83 in the brake caliper 82 projects laterally from the brake caliper 82, and the cover portion 92b has a concave region part 92e covering the connected portion 86 so as to surround it.

According to this configuration, the concave region part 92e covers the connecting portion 86 projected laterally from the brake caliper 82, which can effectively suppress splashing from the road surface R onto the brake caliper 82.

Furthermore, in the above-mentioned straddle type vehicle 1, the drain portion 89 which is communicated with the cylinder chamber 82d of the brake caliper 82 projects laterally from the brake caliper 82, and the cover portion 92b has the concave part 92f covering the drain portion 89 so as to surround it.

According to the configuration, the concave part 92f covers the drain portion 89 which projects laterally from the brake caliper 82 so as to surround it, which can effectively suppress splatter from the road surface R onto the brake caliper 82.

The present invention is not limited to the above-mentioned embodiment. The term "straddle type vehicle" can be interpreted generally to include vehicles where the rider straddles the vehicle body (motorcycles, motor tricycles (including a vehicle with one front wheel and two rear wheels in addition to a vehicle with two front wheels and one rear wheel) and a four-wheeled vehicle and the like).

The engine 3 in the above embodiment is an engine in which the crankshaft is disposed along the longitudinal direction, such as a horizontally opposed four-cylinder engine. However, the cylinder may be a two-cylinder type or a six-cylinder type. Further, the cylinders may also be arranged in a V-type. In addition, the engine may also be of the transverse type, in which the crank shaft is disposed so as to extend horizontally in the lateral direction of the vehicle). In this case, the cylinders are arranged in various ways. Furthermore, the power unit 30 may be configured such that the driving source includes an electric motor.

The configuration in the above-mentioned embodiment is an example of the present invention. Various modifications such that the parts in the embodiment are replaced with well-known parts can be applied without deviating from the scope of the present invention, as defined in the appended claims.

## Claims

1. A straddle type vehicle (1) having two front wheels (2) and a single rear wheel (48), which has a front wheel suspension device (4) axially supporting a front wheel (2),
a front fender (90) covering an upper part of said front wheel (2), and
a front wheel brake system (80) for braking said front wheel (2),
wherein said front wheel brake system (80) has a brake disc (81) provided on said front wheel (2), and a brake caliper (82) generating braking force by gripping said brake disc (81),
**characterized in that** said front fender (90) has a cover portion (92b) covering said brake caliper (82) and avoiding said front wheel suspension device (4), and **in that** said brake caliper (82) and said cover portion (92b) are disposed in front of a shaft (2b) of said front wheel (2).

2. The straddle type vehicle according to Claim 1, **characterized in that** said cover portion (92b) has a drooping portion (92c) extending downwardly from a main body (91) of said front fender (90) covering a part of the outer periphery of said front wheel (2) and covering said brake caliper (82) from the side, and a lower extended portion (92d) extends from said drooping portion (92c) toward said brake caliper (82) side and covers said brake caliper (82) from below.

3. The straddle type vehicle according to Claim 1 or 2, **characterized in that** a guide portion (99) for guiding the traveling wind to said brake caliper (82) is formed on said cover portion (92b).

4. The straddle type vehicle according to any one of Claims 1 to 3, **characterized in that** a connected portion (86) which connects hydraulic pressure piping (83) of said brake caliper (82) projects laterally from said brake caliper (82), and said cover portion (92b) has a concave region part (92e) covering said connected portion (86).

5. The straddle type vehicle according to any one of Claims 1 to 4, **characterized in that** a drain portion (89) which communicates with a cylinder chamber (82d) of said brake caliper (82) projects laterally from said brake caliper (82), and said cover portion (92b) has a concave part (92f) covering said drain portion (89).

## Patentansprüche

1. Fahrzeug vom Spreizsitztyp (1), das zwei Vorderräder (2) und ein einzelnes Hinterrad (48) aufweist, das eine Vorderrad-Aufhängungsvorrichtung (4) aufweist, die ein Vorderrad (2) axial stützt,
einen vorderen Kotflügel (90), der einen oberen Teil des Vorderrades (2) abdeckt, und
ein Vorderrad-Bremssystem (80) zum Bremsen des Vorderrades (2),
wobei das Vorderrad-Bremssystem (80) eine Bremsscheibe (81) aufweist, die auf dem Vorderrad (2) bereitgestellt ist, und einen Bremssattel (82), der durch Greifen der Bremsscheibe (81) Bremskraft erzeugt,
**dadurch gekennzeichnet, dass** der vordere Kotflügel (90) einen Abdeckabschnitt (92b) aufweist, der den Bremssattel (82) abdeckt und der Vorderrad-Aufhängungsvorrichtung (4) ausweicht, und dadurch, dass der Bremssattel (82) und der Abdeckabschnitt (92b) vor einer Welle (2b) des Vorderrades (2) angeordnet sind.

2. Fahrzeug vom Spreizsitztyp nach Anspruch 1, **dadurch gekennzeichnet, dass** der Abdeckabschnitt (92b) einen herabhängenden Abschnitt (92c) aufweist, der sich von einer Hauptkarosserie (91) des vorderen Kotflügels (90), die einen Teil der äußeren Peripherie des Vorderrades (2) abdeckt, nach unten erstreckt, und den Bremssattel (82) von der Seite abdeckt, und sich ein unterer erweiterter Abschnitt (92d) vom herabhängenden Abschnitt (92c) in Richtung der Seite des Bremssattels (82) erstreckt und den Bremssattel (82) von unten abdeckt.

3. Fahrzeug vom Spreizsitztyp nach Anspruch 1 oder 2, **dadurch gekennzeichnet, dass** ein Führungabschnitt (99) zum Führen des Fahrtwindes auf den Bremssattel (82) auf dem Abdeckabschnitt (92b) gebildet ist.

4. Fahrzeug vom Spreizsitztyp nach einem der Ansprüche 1 bis 3, **dadurch gekennzeichnet, dass** ein verbundener Abschnitt (86), der eine Hydraulikdruckleitung (83) des Bremssattels (82) verbindet, seitlich aus dem Bremssattel (82) herausragt, und der Abdeckabschnitt (92b) einen konkaven Bereichsteil (92e) aufweist, der den verbundenen Abschnitt (86) abdeckt.

5. Fahrzeug vom Spreizsitztyp nach einem der Ansprüche 1 bis 4, **dadurch gekennzeichnet, dass** ein Abflussabschnitt (89), der mit einer Zylinderkammer (82d) des Bremssattels (82) in Verbindung steht, seitlich aus dem Bremssattel (82) herausragt und der Abdeckabschnitt (92b) einen konkaven Teil (92f) aufweist, der den Abflussabschnitt (89) abdeckt.

## Revendications

1. Véhicule de type à selle (1) ayant deux roues avant (2) et une seule roue arrière (48), qui a un dispositif de suspension de roue avant (4) supportant de façon axiale une roue avant (2),
un garde-boue avant (90) recouvrant une partie supérieure de ladite roue avant (2), et
un système de frein de roue avant (80) pour freiner ladite roue avant (2),
dans lequel ledit système de frein de roue avant (80) possède un disque de frein (81) prévu sur ladite roue avant (2) et un étrier de frein (82) produisant une force de freinage en serrant ledit disque de frein (81),
**caractérisé en ce que** ledit garde-boue avant (90) possède une portion de couverture (92b) recouvrant ledit étrier de frein (82) et évitant ledit dispositif de suspension de roue avant (4) et **en ce que** ledit étrier de frein (82) et ladite portion de couverture (92b) sont disposés devant un axe (2b) de ladite roue avant (2).

2. Véhicule de type à selle selon la revendication 1, **caractérisé en ce que** ladite portion de couverture (92b) a une portion plongeante (92c) s'étendant vers le bas à partir d'un corps principal (91) dudit garde-boue avant (90) recouvrant une partie de la périphérie extérieure de ladite roue avant (2) et recouvrant ledit étrier de frein (82) par le côté, et une portion prolongée plus basse (92d) s'étend depuis ladite portion plongeante (92c) vers ledit côté étrier de frein (82) et couvre ledit étrier de frein (82) par le dessous.

3. Véhicule de type à selle selon la revendication 1 ou 2, **caractérisé en ce qu'**une portion de guidage (99) pour guider le vent voyageant jusqu'audit étrier de frein (82) est formée sur ladite portion de couverture (92b).

4. Véhicule de type à selle selon l'une quelconque des revendications 1 à 3, **caractérisé en ce qu'**une portion raccordée (86) qui raccorde une tuyauterie de pression hydraulique (83) dudit étrier de frein (82) dépasse latéralement dudit étrier de frein (82), et ladite portion de couverture (92b) a une partie formant région concave (92e) recouvrant ladite portion raccordée (86).

5. Véhicule de type à selle selon l'une quelconque des revendications 1 à 4, **caractérisé en ce qu'**une portion d'écoulement (89) qui communique avec une chambre de cylindre (82d) dudit étrier de frein (82) dépasse latéralement dudit étrier de frein (82), et ladite portion de couverture (92b) possède une partie concave (92f) recouvrant ladite portion d'écoulement (89).
